# EUROPEAN PATENT SPECIFICATION

(11) **EP 4 472 850 B1**
(45) Date of publication and mention of the grant of the patent: **13.08.2025**
(21) Application number: 23726844.6
(22) Date of filing: 13.04.2023
(51) Int. Cl.: B60H 1/00, B60H 1/32, B60H 3/02, B01D 53/04, B60H 3/06

(54) **CABIN AIR CONTROL SYSTEM WITH A SINGLE ADSORPTION UNIT**
KABINENLUFTREGELSYSTEM MIT EINER EINZIGEN ADSORPTIONSEINHEIT
SYSTÈME DE COMMANDE D'AIR D'HABITACLE COMPORTANT UNE SEULE UNITÉ D'ADSORPTION

(43) Date of publication of application: 11.12.2024
(73) Proprietor: MANN+HUMMEL GmbH, 71636 Ludwigsburg (DE)
(72) Inventor: CHAI, Jon, Shanghai 201815 (CN); WU, Lei, Shanghai 201815 (CN); MBADINGA MOUANDA, Gelase, 74343 Sachsenheim (DE)
(74) Representative: Mann + Hummel Intellectual Property
(86) International application number: PCT/CN2023/087962
(87) International publication number: WO 2024/212144

(56) References cited:
- DE-A1- 19 624 216
- DE-A1- 19 653 964
- DE-A1- 19 718 047
- JP-A- 2016 101 767

## Description

### Technical Field

The present invention relates to a Heating, Venting, and Air Conditioning (HVAC) system for a vehicle, and more specifically to a cabin air control system for HVAC system.

### Background

The HVAC system can be operated in an external circulation mode or in an air recirculation (i.e., internal circulation) mode. The power consumed by the HVAC system of electric vehicles is mostly between 1-2kW, that is, every hour of air conditioning will reduce about 10.9km of range. If the vehicle turns on the external circulation but under the maximum air volume conditions, additional 7km of range will be reduce every hour, that is, if the HVAC system turns on external circulation mode, the vehicle is in the external circulation mode, the HVAC system will reduce 17.9km of range per hour. This will greatly reduce the range of electric vehicles.

If the HVAC system is in the air recirculation mode, the power consumed will be greatly reduced. However, adults normally emit about 30 g/hour of water and about 40g/hour of carbon dioxide by breathing. If the HVAC system is always in air recirculation mode while the vehicle is moving, the water vapor emitted by the human body will cause fogging on the glass of the vehicle, which will bring unpredictable danger to the driver and passengers of the vehicle. If the defogging mode is continuously turned on, it will increase the power consumption and reduce the range of the vehicle. Moreover, in the air recirculation mode, the CO₂ inside the vehicle will continue to increase, which will cause the driver to be sleepy during driving, which will bring potential danger to the normal operation of the vehicle.

At present, there is proposed a double adsorption unit structure including a first adsorption unit and a second adsorption unit. However, the double adsorption unit structure has a large volume, which increases the difficulty of vehicle layout; the weight thereof is heavier, and the double adsorption unit structure itself needs to add more components to strengthen the structure; in addition, the cost is high, and the double adsorption unit requires two heaters and two motors to be managed separately.

To this end, it is desirable to develop a single adsorption unit structure, which ensures performance, has relatively small size, has relatively light weight, uses a single heater and a single motor to achieve operation control, reduces the manufacturing cost, greatly improves the compatibility of the air control system of the vehicle, and at the same time meets the basic function of vehicle energy saving, thereby improving the market competitiveness of the system.

DE 197 18 047 A1 is directed to a device that reduces humidity in a car cabin. The device is connected on the one hand through an exhaust channel and on the other hand through a feed channel to the cabin. The device comprises a reactor consisting of a sorbent to which a heating device upstream is assigned. In a drier housing with an elongated stretch, near one end of a longitudinal direction, an air entry chamber is provided with an inlet and at the other end of the drier housing, at least one outlet. The reactor consists of a ballast of a sorption material located between a first and second air chamber running in the longitudinal direction of the drier housing.

DE 196 24 216 A1 is directed to an adsorption unit for treating an air stream supplied to a vehicle interior, rejecting air externally, using a blower to induce the appropriate air steam. An adsorbent is integrated into a heater or an air conditioning unit, between a blower and the heater. Air control dampers are located near the blower. In their adsorption positions, the air stream is directed into the interior; in their desorption positions, the air steam is directed into surrounding air.

DE 196 53 964 A1 is directed to a unit that conditions airflow to a vehicle interior. It has a fan and a filter containing sorbent. Here, moisture and impurities are removed from an adsorption air flow. A heater is provided for a desorption air flow. The filter is operated intermittently. The heater is situated in an air flow path external to the adsorption air flow. This duct containing the heater can be connected to the filter when necessary, by a damper.

JP 2016 101767 A is directed to an air conditioner for a vehicle that includes a first sensor that detects a temperature of air before flowing in a dehumidification member in an upstream side position of the dehumidification member on a flow channel of air flowing in a cabin, and a second sensor that detects a temperature of air after passing through the dehumidification member in a downstream side position of the dehumidification member on the flow channel. The air conditioner further includes a regeneration start determination part that determines a start of regeneration processing of the dehumidification member by a regeneration processing part when a difference between the temperature of the air after passing through the dehumidification member detected by the second sensor and the temperature of the air before flowing in the dehumidification member detected by the first sensor is a first threshold or lower.

### Summary

Objects of the present invention are to provide an integrated cabin air recirculation system, which is simple in structure, reduces the number of components and is easy to assembly.

In one aspect, a cabin air control system is provided. The cabin air control system comprises:
an upper housing including a first end and an opposite second end;
a lower housing including:
   a first end;
   an opposite second end;
   an air inlet passage with an inlet opening at the first end of the lower housing; and
   a regeneration air chamber communicating with the air inlet passage via a regeneration air port,
wherein the upper housing and the lower housing together defines an adsorption unit chamber above the regeneration air chamber and communicating with the air inlet passage via an adsorption air port, and
the upper housing further includes an outlet passage, an outlet opening and an exhaust conduit, the outlet passage selectively communicating with the outlet opening and the exhaust conduit;
a single adsorption unit disposed in the adsorption unit chamber, the adsorption unit being configured to adsorb moisture and/or carbon dioxide;
a heater disposed in the regeneration air chamber, the heater being configured to heat air before being delivered to the adsorption unit, and the heated air being used to regenerate the adsorption unit; and
a flap control assembly configured to switch between an adsorption mode and a regeneration mode, the flap control assembly including an inlet flap configured to be rotated between a first inlet position corresponding to the adsorption mode and a second inlet position corresponding to the regeneration mode,
wherein, in the first inlet position, the adsorption air port is open and the regeneration air port is closed by the inlet flap, so that the air flows into the adsorption unit chamber and bypasses the heater, and
in the second inlet position, the adsorption air port is closed by the inlet flap and the regeneration air port is open, so that the air flows into the regeneration air chamber, through the heater and into the adsorption unit chamber, and is heated to regenerate the adsorption unit.

Preferably, the flap control assembly further includes an outlet flap configured to be rotated between a first outlet position corresponding to the adsorption mode and a second outlet position corresponding to the regeneration mode. In the first outlet position, the outlet opening is open and the exhaust conduit is closed by the outlet flap, so that adsorbed and/or purified air flows into a cabin via the outlet opening, and in the second outlet position, the outlet opening is closed by the outlet flap and the exhaust conduit is open, so that exhaust including gas and water after regeneration flows to an environment through the exhaust conduit.

Preferably, the inlet flap and the outlet flap are connected by a link, so that the inlet flap and the outlet flap are driven by a single drive mechanism.

Preferably, the flap control assembly further includes an outlet flap coupling and an inlet flap coupling. The outlet flap coupling is fixedly connected with the outlet flap and is rotatably connected with the drive mechanism, the inlet flap coupling is fixedly connected with the inlet flap, the outlet flap coupling is provided with a first eccentric pin, the inlet flap coupling is provided with a second eccentric pin, and the link is connected to the first eccentric pin at one end thereof and is connected to the second eccentric pin at the other end thereof, so that when the outlet flap is rotated by the drive mechanism to the first outlet position or the second outlet position, the inlet flap is also rotated to the corresponding first inlet position or second inlet position via the link.

Preferably, the outlet flap is provided with a blocking pad at an end remote to the drive mechanism. In the first outlet position, the blocking pad blocks the exhaust conduit, and in the second outlet position, the blocking pad does not block the exhaust conduit.

Preferably, the adsorption unit includes water vapor adsorption material.

Preferably, the adsorption unit includes carbon dioxide adsorption material.

Preferably, the adsorption unit includes volatile matter adsorption material.

Preferably, the heater includes a seal flange and a seal ring extending circumferentially around the seal flange. When the heater is installed in place in the lower housing, the seal ring seals against corresponding structure of the lower housing.

Preferably, the heater is provided with at least one temperature sensor configured to effectively monitor temperature change of the heater to prevent accidents caused by heater overheating and failure caused by heater failure and to control regeneration temperature.

By means of the structure design of the single adsorption unit, the cabin air control system of the present invention is simple in structure, reduces the number of components and the volume of the cabin air control system and is easy to assembly while ensuring performance of the cabin air control system, which greatly improves the vehicle compatibility of the cabin air control system.

In addition, by means of the structure design of the single adsorption unit, the weight of the cabin air control system of the present invention is relatively light, while ensuring performance of the cabin air control system, which reduces the production cost and facilitates the installation and maintenance of the cabin air control system on the whole vehicle

The cabin air control system of the present invention adopts a single heater to realize operational control, which reduces the cost of the cabin air control system and enhances the market competitiveness of the cabin air control system.

In addition, the flap control assembly of the cabin air control system of the present invention adopts a single motor to drive both the inlet flap and the outlet flap, which reduces the cost of the cabin air control system and enhances the market competitiveness of the cabin air control system.

The cabin air control system is integrated with a temperature detection sensor, which can effectively monitor temperature change of the heater and to prevent accidents caused by heater overheating and failure caused by heater failure as well as to control regeneration temperature.

The distance between the heater and the adsorption unit is relatively close, which reduces the heat loss of the heated air, improves the heat utilization of during system regeneration, shortens the time for regeneration, and improves the efficiency of regeneration.

The cabin air control system uses a single adsorption unit, a single motor and a single heater, which together reduce the complexity control logic, and reduce the control cost of the cabin air control system.

Further areas of applicability of the present invention will become apparent from the detailed description, the claims and the drawings. The detailed description and specific examples are intended for purposes of illustration only and are not intended to limit the scope of the claims.

### Brief Description of the Drawings

The present invention will become more fully understood from the detailed description and the accompanying drawings.
Fig.1 is a schematic diagram of a cabin air control system of the present invention.
Fig.2 is a schematic structural explosive diagram of the cabin air control system of the present invention.
Fig.3 is a schematic structural explosive diagram of a flap control assembly of the cabin air control system of the present invention.
Fig.4 is a top view of the cabin air control system of the present invention.
Fig.5 is a front view of the cabin air control system of the present invention.
Fig.6 is a side view of an upper housing and a lower housing of the cabin air control system of the present invention.
Fig.7 schematically illustrates in cross-sectional view an adsorption mode of the cabin air control system of the present invention.
Fig.8 schematically illustrates in cross-sectional view a regeneration mode of the cabin air control system of the present invention.
Fig.9 is a schematic perspective diagram of a heater of the cabin air control system of the present invention.
Fig.10 is a schematic perspective diagram of a flap control assembly of the cabin air control system of the present invention.
Fig.11 is a schematic partial perspective diagram of the cabin air control system of the present invention wherein the outlet flap is located at a first outlet position corresponding to the adsorption mode.
Fig.12 is a schematic partial perspective diagram of the cabin air control system of the present invention wherein the outlet flap is located at a second outlet position corresponding to the regeneration mode.

### Detailed Description of Embodiments

As used herein, words such as "up", "down", "left", and "right" used herein to define orientations generally refer to and are understood as orientations in association with the drawings and orientations in actual application.

As used herein, the term "vehicle" may be used interchangeably and synonymously to include any relevant vehicle platform, such as passenger vehicles (ICE, HEV, FEV, fuel cell, fully and partially autonomous, etc.), commercial vehicles, industrial vehicles, tracked vehicles, off-road and all-terrain vehicles (ATV), motorcycles, farm equipment, watercraft, aircraft, etc. In an example, an electric vehicle includes a vehicle body with a passenger cabin, multiple road wheels mounted to the vehicle body, and other standard original equipment. An electrified powertrain contains one or more vehicle-mounted traction motors that operate alone (e.g., for FEV powertrains) or in conjunction with an internal combustion engine assembly (e.g., for HEV powertrains) to selectively drive one or more of the road wheels and thereby propel the vehicle.

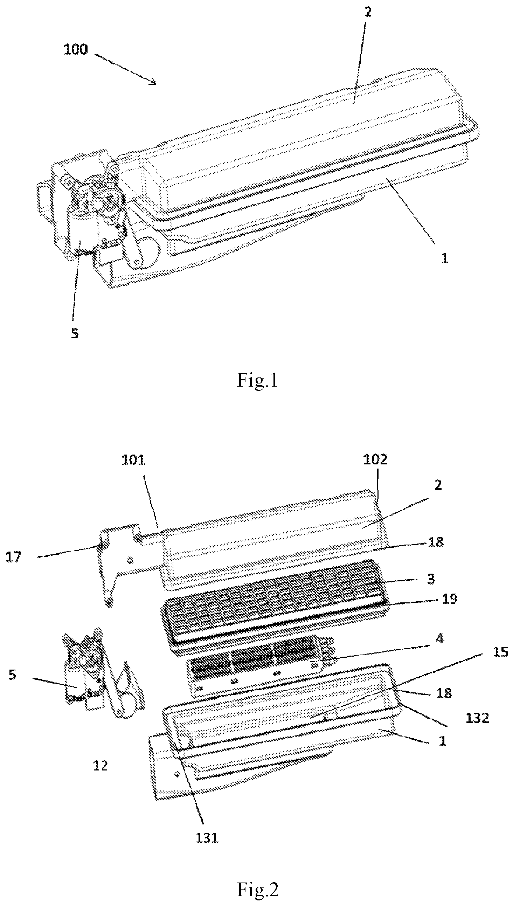

Referring now to the drawings, wherein like reference numbers refer to like features throughout the several views, Fig.1 is a schematic diagram of a cabin air control system 100 of the present invention; Fig.2 is a schematic structural explosive diagram of the cabin air control system 100 of the present invention.

The cabin air control system 100 may comprises an upper housing 2; a lower housing 1; a single adsorption unit 3; a heater 4; and a flap control assembly 5 configured to switch between an adsorption mode and a regeneration mode. The cabin air control system 100 may comprise other components as needed, such as a controller, at least one sensor, etc, without departing the scope of the claims. By means of the structure design of the single adsorption unit 3, the cabin air control system 100 of the present invention is simple in structure, reduces the number of components and the volume of the cabin air control system 100 and is easy to assembly while ensuring performance of the cabin air control system 100, which greatly improves the vehicle compatibility of the cabin air control system 100. In addition, by means of the structure design of the single adsorption unit 3, the weight of the cabin air control system 100 of the present invention is relatively light, while ensuring performance of the cabin air control system 100, which reduces the production cost and facilitates the installation and maintenance of the cabin air control system 100 on the whole vehicle. The cabin air control system 100 of the present invention adopts a single heater to realize operational control, which reduces the cost of the cabin air control system 100 and enhances the market competitiveness of the cabin air control system 100.

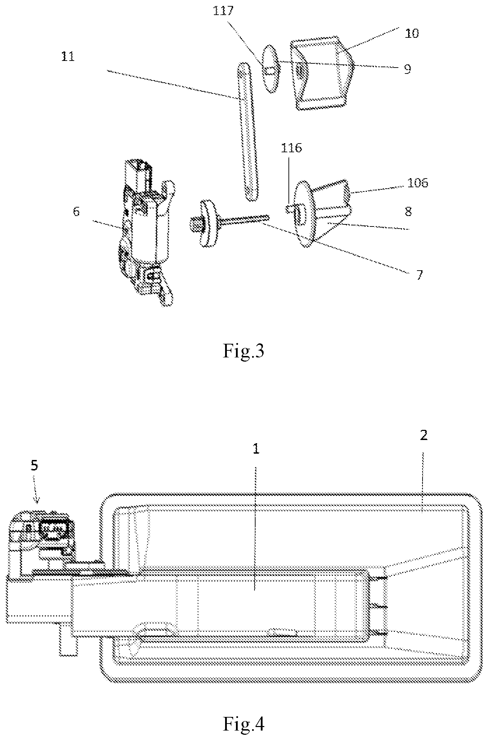

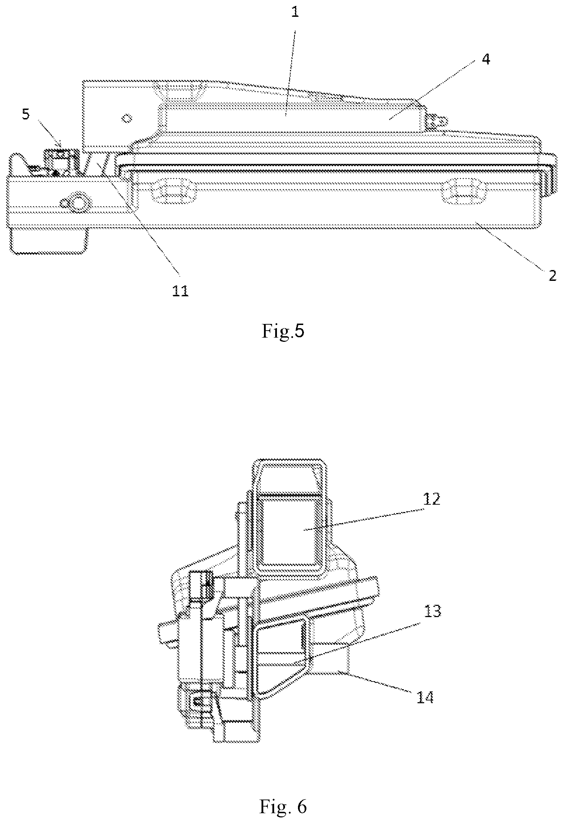

Fig.4 is a top view of the cabin air control system 100 of the present invention. Fig.5 is a front view of the cabin air control system 100 of the present invention. Fig.6 is a side view of an upper housing 2 and a lower housing 1 of the cabin air control system 100 of the present invention.

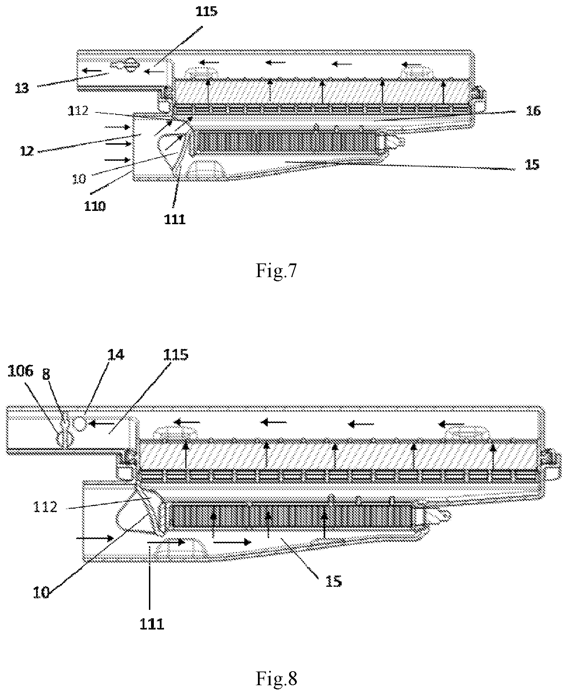

As a non-limiting example, the lower housing 1 may include a first end 131 and an opposite second end 132; an air inlet passage 12 with an inlet opening 110 (Fig.7) at the first end 131 of the lower housing 1; and a regeneration air chamber 15 communicating with the air inlet passage 12 via a regeneration air port 111.

As a non-limiting example, the lower housing 1 may further include a mounting mechanism for the heater 4, to mount and fix the heater 4. The lower housing 1 may further include an installation structure for an inlet flap 10, to install the inlet flap 10 to ensure the normal control and sealing function of the inlet flap 10. The lower housing 1 may comprise other components as needed, without departing the scope of the claims.

As a non-limiting example, the upper housing 2 may include a first end 101 and an opposite second end 102. As a non-limiting example, the upper housing 2 and the lower housing 1 together define an adsorption unit chamber 16 above the regeneration air chamber 15 and communicating with the air inlet passage 12 via an adsorption air port 112. The upper housing 2 may further include an outlet passage 115, an outlet opening 13 and an exhaust conduit 14, the outlet passage 115 selectively communicates with the outlet opening 13 and the exhaust conduit 14.

In addition, the upper housing 2 may further include a motor positioning and mounting structure 17, to locate and install a drive mechanism 6. The upper housing 2 may further include an outlet flap installation structure, to install the outlet flap 8 to ensure the normal control and sealing function of the outlet flap 8.

The lower housing 1 and the upper housing 2 may further include an installation and sealing structure 18 of the adsorption unit 3, to install and fix the adsorption unit 3 and cooperate with the sealing strip 19 on the adsorption unit 3 to realize the sealing of the cabin air control system against the environment. At the same time, the installation and sealing structure 18 plays the role of separating a humid side from a dry side.

The adsorption unit 3 is disposed in the adsorption unit chamber 16, and configured to adsorb moisture and/or carbon dioxide. The adsorption unit 3 may be filled with water vapor adsorption material, carbon dioxide adsorption material, volatile adsorption material or adsorption material for absorbing other harmful substances according to customer needs. As a non-limiting example, the adsorption material may include resin, which has a certain adsorption capacity at room temperature, and has desorption ability at a temperature of 80-120 °C. By using the properties of low-temperature adsorption and high-temperature desorption of resin, the air quality in the cabin is well controlled. However, as will be understood by those skilled in the art, the adsorption material may be made from any suitable material, without departing the scope of the claims.

The heater 4 is disposed in the regeneration air chamber 15 and is configured to heat air before being delivered to the adsorption unit 3, heated air is used to regenerate the adsorption unit 3.

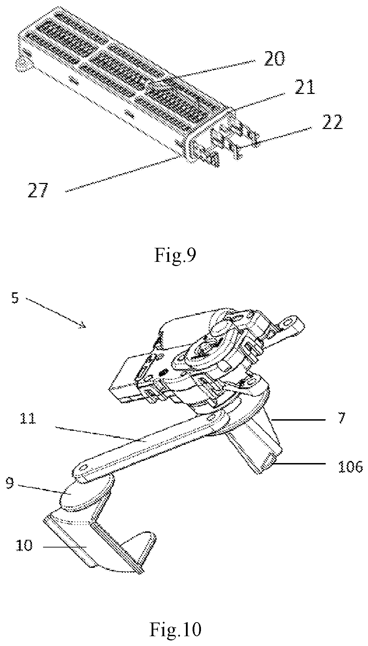

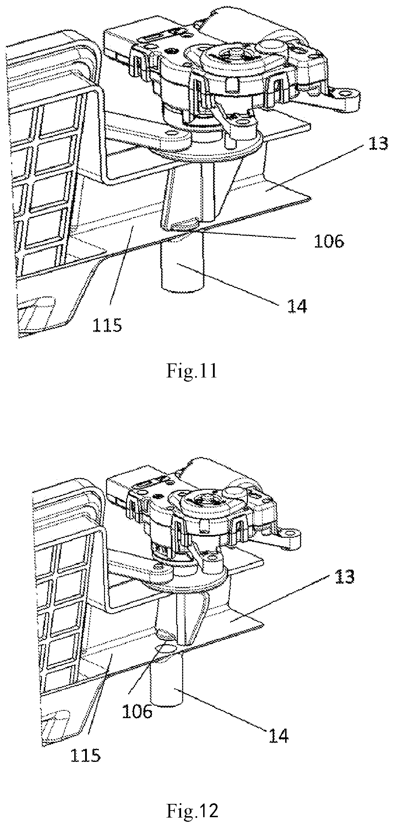

Fig.3 is a schematic structural explosive diagram of a flap control assembly 5 of the cabin air control system 100 of the present invention. Fig.10 is a schematic perspective diagram of a flap control assembly 5 of the cabin air control system 100 of the present invention. Fig.11 is a schematic partial perspective diagram of the cabin air control system 100 of the present invention wherein the outlet flap 8 is located at a first outlet position corresponding to the adsorption mode. Fig.12 is a schematic partial perspective diagram of the cabin air control system 100 of the present invention wherein the outlet flap 8 is located at a second outlet position corresponding to the regeneration mode.

As a non-limiting example, the flap control assembly 5 comprises an inlet flap 10 configured to be rotated between a first inlet position corresponding to the adsorption mode and a second inlet position corresponding to the regeneration mode. In the first inlet position, the adsorption air port 112 is open and the regeneration air port 111 is closed by the inlet flap 10, so that the air flows into the adsorption unit chamber 16 and bypasses the heater 4; in the second inlet position, the adsorption air port 112 is closed by the inlet flap 10 and the regeneration air port 111 is open, so that the air flows into the regeneration air chamber 15, through the heater 4 and into the adsorption unit chamber 16, and is heated to regenerate the adsorption unit 3.

The flap control assembly 5 further comprises an outlet flap 8 configured to be rotated between a first outlet position corresponding to the adsorption mode and a second outlet position corresponding to the regeneration mode. In the first outlet position for example as shown in Fig.11, the outlet opening 13 is open and the exhaust conduit 14 is closed by the outlet flap 8, so that adsorbed and/or purified air flows into a cabin via the outlet opening 13; in the second outlet position for example as shown in Fig.12, the outlet opening 13 is closed by the outlet flap 8 and the exhaust conduit 14 is open, so that the exhaust including gas and water after regeneration flows to the environment through the exhaust conduit 14.

As a non-limiting example, the inlet flap 10 and the outlet flap 8 are connected by a link 11, so that the inlet flap 10 and the outlet flap 8 are driven by a single drive mechanism. As a non-limiting example, the drive mechanism 6 is an electric motor, with control logic and sensor signals for fully automatic control. However, the drive mechanism 6 may also include any other suitable drive mechanism, such as a hydraulic motor, without departing the scope of the claims.

As a non-limiting example, the flap control assembly 5 further comprises an outlet flap coupling 7 and an inlet flap coupling 9, the outlet flap coupling 7 is fixedly connected with the outlet flap 8 and is rotatably connected with the drive mechanism, the inlet flap coupling 9 is fixedly connected with the inlet flap 10, the outlet flap coupling 7 is provided with a first eccentric pin 116, the inlet flap coupling 9 is provided with a second eccentric pin 117. The link 11 is connected to the first eccentric pin 116 at one end thereof and is connected to the second eccentric pin 117 at the other end thereof, so that when the outlet flap 8 is rotated by the drive mechanism to the first outlet position or the second outlet position, the inlet flap 10 is also rotated to corresponding first inlet position or second inlet position via the link 11.

The flap control assembly 5 of the cabin air control system 100 of the present invention adopts a single motor to drive both the inlet flap 10 and the outlet flap 8, which reduces the cost of the cabin air control system 100 and enhances the market competitiveness of the cabin air control system 100.

As will be understood by those skilled in the art, the flap control assembly 5 may also utilize other suitable configurations, for example, the inlet flap 10 may be rotatably connected with the drive mechanism via the inlet flap coupling 9 and the outlet flap 8 may be connected with the inlet flap 10 via a link, so that when the inlet flap 10 is rotated by the drive mechanism to the first inlet position or the second inlet position, the outlet flap 8 is also rotated to corresponding first outlet position or second outlet position via the link, without departing the scope of the claims.

Fig.7 schematically illustrates in cross-sectional view an adsorption mode of the cabin air control system 100 of the present invention. Fig.8 schematically illustrates in cross-sectional view a regeneration mode of the cabin air control system 100 of the present invention. The outlet flap 8 is provided with a blocking pad 106 at an end remote to the drive mechanism, in the first outlet position, the blocking pad 106 blocks the exhaust conduit 14; in the second outlet position, the blocking pad 106 does not block the exhaust conduit 14.

When the cabin air control system is in the adsorption mode (Fig.7), air with high humidity and/or high concentration of CO₂ to the air inlet passage 12 through an air conditioning fan (not shown), and then the air is transported to the adsorption unit 3 via the adsorption chamber 16 Air dehumidification and/or purification is carried out, and then the air flows through the outlet opening 13 and returns to the air conditioning system and is distributed to various areas of the cabin as desired.

When the cabin air control system is in regenerative mode (Fig.8), the air is transported to the air inlet passage 12 through the air conditioning fan, and then the air is transported to the heater 4 via the regeneration air chamber 15. The heater 4 is in working condition, the air is heated to the set temperature, and then the heated air is delivered to the adsorption unit 3. The adsorption material in the adsorption unit 3 is regenerated. The exhaust including gas such as CO₂ and water after regeneration flows to the environment through the exhaust conduit 14.

Fig.9 is a schematic perspective diagram of a heater 4 of the cabin air control system 100 of the present invention. The heater 4 includes at least one temperature sensor 20, which can effectively monitor the temperature change of the heater 4 and prevent accidents caused by heater overheating and failure caused by heater failure as well as control regeneration temperature. As a non-limiting example, the heater 4 includes two temperature sensors 20.

However, as will be understood by those skilled in the art, the heater 4 may include any suitable number of temperature sensors 20, without departing the scope of the claims.

The heater 4 further includes a seal flange 27 and a seal ring 21 extending circumferentially around the seal flange 27. When the heater 4 is installed in place in the lower housing 1, the seal ring 21 seals against corresponding structure of the lower housing 1. The heater 4 further includes a flange face, designed with a power plug interface 22, for connecting the heater 4 to the power supply. As will be understood by those skilled in the art, the heater 4 may comprise other components as needed, without departing the scope of the claims.

The cabin air control system 100 uses a single adsorption unit 3, a single motor and a single heater 4, which together reduce the complexity control logic, and reduce the control cost of the cabin air control system 100.

Aspects of the present invention have been described in detail with reference to the illustrated embodiments; those skilled in the art will recognize, however, that many modifications may be made thereto without departing from the scope of the claims. The present invention is not limited to the precise construction and compositions disclosed herein; any and all modifications, changes, and variations apparent from the foregoing descriptions are within the scope of the appended claims.

## Claims

1. A cabin air control system (100) comprising:
an upper housing (2) including a first end (101) and an opposite second end (102);
a lower housing (1) including:
a first end (131);
an opposite second end (132);
an air inlet passage (12) with an inlet opening (110) at the first end (131) of the lower housing (1); and
a regeneration air chamber (15) communicating with the air inlet passage (12) via a regeneration air port (111),
wherein the upper housing (2) and the lower housing (1) together define an adsorption unit chamber (16) above the regeneration air chamber (15) and communicating with the air inlet passage (12) via an adsorption air port (112), and
the upper housing (2) further includes an outlet passage (115), an outlet opening (13) and an exhaust conduit (14), the outlet passage (115) selectively communicating with the outlet opening (13) and the exhaust conduit (14);
a single adsorption unit (3) disposed in the adsorption unit chamber (16), the adsorption unit (3) being configured to adsorb moisture and/or carbon dioxide;
a heater (4) disposed in the regeneration air chamber (15), the heater (4) being configured to heat air before being delivered to the adsorption unit (3), and the heated air being used to regenerate the adsorption unit (3); and
a flap control assembly (5) configured to switch between an adsorption mode and a regeneration mode, the flap control assembly (5) including an inlet flap (10) configured to be rotated between a first inlet position corresponding to the adsorption mode and a second inlet position corresponding to the regeneration mode,
wherein, in the first inlet position, the adsorption air port (112) is open and the regeneration air port (111) is closed by the inlet flap (10), so that the air flows into the adsorption unit chamber (16) and bypasses the heater (4), and
in the second inlet position, the adsorption air port (112) is closed by the inlet flap (10) and the regeneration air port (111) is open, so that the air flows into the regeneration air chamber (15), through the heater (4) and into the adsorption unit chamber (16), and is heated to regenerate the adsorption unit (3).

2. The cabin air control system (100) according to claim 1, wherein the flap control assembly (5) further includes an outlet flap (8) which is configured to be rotated between a first outlet position corresponding to the adsorption mode and a second outlet position corresponding to the regeneration mode,
wherein, in the first outlet position, the outlet opening (13) is open and the exhaust conduit (14) is closed by the outlet flap (8), so that adsorbed and/or purified air flows into a cabin via the outlet opening (13), and
in the second outlet position, the outlet opening (13) is closed by the outlet flap (8) and the exhaust conduit (14) is open, so that exhaust including gas and water after regeneration flows to an environment through the exhaust conduit (14).

3. The cabin air control system (100) according to claim 2, wherein the inlet flap (10) and the outlet flap (8) are connected by a link (11), so that the inlet flap (10) and the outlet flap (8) are driven by a single drive mechanism.

4. The cabin air control system (100) according to claim 3, wherein the flap control assembly (5) further includes an outlet flap coupling (7) and an inlet flap coupling (9),
wherein the outlet flap coupling (7) is fixedly connected with the outlet flap (8) and is rotatably connected with the drive mechanism,
the inlet flap coupling (9) is fixedly connected with the inlet flap (10),
the outlet flap coupling (7) is provided with a first eccentric pin (116),
the inlet flap coupling (9) is provided with a second eccentric pin (117), and
the link (11) is connected to the first eccentric pin (116) at one end thereof and is connected to the second eccentric pin (117) at the other end thereof, so that when the outlet flap (8) is rotated by the drive mechanism to the first outlet position or the second outlet position, the inlet flap (10) is also rotated to the corresponding first inlet position or second inlet position via the link (11).

5. The cabin air control system (100) according to claim 4, wherein the outlet flap (8) is provided with a blocking pad (106) at an end remote to the drive mechanism,
wherein, in the first outlet position, the blocking pad (106) blocks the exhaust conduit (14), and
in the second outlet position, the blocking pad (106) does not block the exhaust conduit (14).

6. The cabin air control system (100) according to any one of claims 1 to 5, wherein the adsorption unit (3) includes water vapor adsorption material.

7. The cabin air control system (100) according to any one of claims 1 to 5, wherein the adsorption unit (3) includes carbon dioxide adsorption material.

8. The cabin air control system (100) according to any one of claims 1 to 5, wherein the adsorption unit (3) includes volatile matter adsorption material.

9. The cabin air control system (100) according to any one of claims 1 to 5, wherein the heater (4) includes a seal flange (27) and a seal ring (21) extending circumferentially around the seal flange (27), and
when the heater (4) is installed in place in the lower housing (1), the seal ring (21) seals against corresponding structure of the lower housing (1).

10. The cabin air control system (100) according to claim 9, wherein the heater (4) is provided with at least one temperature sensor (26) configured to effectively monitor temperature change of the heater (4) to prevent accidents caused by heater overheating and failure caused by heater failure and to control regeneration temperature.

## Patentansprüche

1. Kabinenluftregelsystem (100), umfassend:
ein oberes Gehäuse (2), das ein erstes Ende (101) und ein gegenüberliegendes zweites Ende (102) beinhaltet;
in unteres Gehäuse (1) beinhaltend:
ein erstes Ende (131);
ein gegenüberliegendes zweites Ende (132);
einen Lufteinlasskanal (12) mit einer Einlassöffnung (110) am ersten Ende (131) des unteren Gehäuses (1); und
eine Regenerationsluftkammer (15), die über eine Regenerationsluftöffnung (111) mit dem Lufteinlasskanal (12) in Verbindung steht,
wobei das obere Gehäuse (2) und das untere Gehäuse (1) zusammen eine Adsorptionseinheitskammer (16) über der Regenerationsluftkammer (15) bilden und mit dem Lufteinlasskanal (12) über eine Adsorptionsluftöffnung (112) in Verbindung stehen, und
das obere Gehäuse (2) ferner einen Auslasskanal (115), eine Auslassöffnung (13) und eine Abluftleitung (14) beinhaltet, wobei der Auslasskanal (115) selektiv mit der Auslassöffnung (13) und der Abluftleitung (14) in Verbindung steht;
eine einzige Adsorptionseinheit (3), die in der Adsorptionseinheitskammer (16) angeordnet ist, wobei die Adsorptionseinheit (3) so konfiguriert ist, dass sie Feuchtigkeit und/oder Kohlendioxid adsorbiert;
eine Heizvorrichtung (4), die in der Regenerationsluftkammer (15) angeordnet ist, wobei die Heizvorrichtung (4) so konfiguriert ist, dass sie die Luft erwärmt, bevor diese der Adsorptionseinheit (3) zugeführt wird, und wobei die erwärmte Luft zur Regeneration der Adsorptionseinheit (3) verwendet wird; und
eine Klappensteuerungsanordnung (5), die so konfiguriert ist, dass sie zwischen einem Adsorptionsmodus und einem Regenerationsmodus umschaltet, wobei die Klappensteuerungsanordnung (5) eine Einlassklappe (10) beinhaltet, die so konfiguriert ist, dass sie zwischen einer ersten Einlassposition, die dem Adsorptionsmodus entspricht, und einer zweiten Einlassposition, die dem Regenerationsmodus entspricht, umschaltet,
wobei in der ersten Einlassposition die Adsorptionsluftöffnung (112) offen ist und die Regenerationsluftöffnung (111) durch die Einlassklappe (10) geschlossen ist, so dass die Luft in die Adsorptionseinheitskammer (16) strömt und die Heizvorrichtung (4) umgeht, und
in der zweiten Einlassposition die Adsorptionsluftöffnung (112) durch die Einlassklappe (10) geschlossen ist und die Regenerationsluftöffnung (111) offen ist, so dass die Luft in die Regenerationsluftkammer (15), durch die Heizvorrichtung (4) und in die Adsorptionseinheitskammer (16) strömt und zur Regeneration der Adsorptionseinheit (3) erwärmt wird.

2. Kabinenluftregelsystem (100) nach Anspruch 1, wobei die Klappensteuerungsanordnung (5) ferner eine Auslassklappe (8) beinhaltet, die so konfiguriert ist, dass sie zwischen einer ersten Auslassposition, die dem Adsorptionsmodus entspricht, und einer zweiten Auslassposition, die dem Regenerationsmodus entspricht, rotiert,
wobei in der ersten Auslassposition die Auslassöffnung (13) offen ist und die Abluftleitung (14) durch die Auslassklappe (8) verschlossen ist, so dass adsorbierte und/oder gereinigte Luft über die Auslassöffnung (13) in einen Innenraum strömt, und
in der zweiten Auslassposition die Auslassöffnung (13) durch die Auslassklappe (8) verschlossen ist und die Abluftleitung (14) offen ist, so dass Abluft, die Gas und Wasser nach der Regeneration beinhaltet, durch die Abluftleitung (14) in eine Umgebung strömt.

3. Kabinenluftregelsystem (100) nach Anspruch 2, wobei die Einlassklappe (10) und die Auslassklappe (8) durch ein Verbindungsglied (11) verbunden sind, so dass die Einlassklappe (10) und die Auslassklappe (8) durch einen einzigen Antriebsmechanismus angetrieben werden.

4. Kabinenluftregelsystem (100) nach Anspruch 3, wobei die Klappensteuerungsanordnung (5) ferner eine Auslassklappenkupplung (7) und eine Einlassklappenkupplung (9) beinhaltet,
wobei die Auslassklappenkupplung (7) fest mit der Auslassklappe (8) verbunden ist und drehbar mit dem Antriebsmechanismus verbunden ist,
die Einlassklappenkupplung (9) fest mit der Einlassklappe (10) verbunden ist,
die Auslassklappenkupplung (7) mit einem ersten Exzenterzapfen (116) versehen ist,
die Einlassklappenkupplung (9) mit einem zweiten Exzenterzapfen (117) versehen ist, und
das Verbindungsglied (11) an einem Ende derselben mit dem ersten Exzenterzapfen (116) verbunden ist und an dem anderen Ende derselben mit dem zweiten Exzenterzapfen (117) verbunden ist, so dass, wenn die Auslassklappe (8) durch den Antriebsmechanismus in die erste Auslassposition oder die zweite Auslassposition gedreht wird, die Einlassklappe (10) über das Verbindungsglied (11) ebenfalls in die entsprechende erste Einlassposition oder zweite Einlassposition gedreht wird.

5. Kabinenluftregelsystem (100) nach Anspruch 4, wobei die Auslassklappe (8) an einem vom Antriebsmechanismus entfernten Ende mit einem Sperrpolster (106) versehen ist,
wobei in der ersten Auslassposition das Sperrpolster (106) die Abluftleitung (14) blockiert, und
in der zweiten Auslassposition das Sperrpolster (106) die Abluftleitung (14) nicht blockiert.

6. Kabinenluftregelsystem (100) nach einem der Ansprüche 1 bis 5, wobei die Adsorptionseinheit (3) Wasserdampfadsorptionsmaterial beinhaltet.

7. Kabinenluftregelsystem (100) nach einem der Ansprüche 1 bis 5, wobei die Adsorptionseinheit (3) Kohlenstoffdioxidadsorptionsmaterial beinhaltet.

8. Kabinenluftregelsystem (100) nach einem der Ansprüche 1 bis 5, wobei die Adsorptionseinheit (3) flüchtiges Bestandteiladsorptionsmaterial beinhaltet.

9. Kabinenluftregelsystem (100) nach einem der Ansprüche 1 bis 5, wobei die Heizvorrichtung (4) einen Dichtungsflansch (27) und einen Dichtungsring (21) beinhaltet, der sich in Umfangsrichtung um den Dichtungsflansch (27) erstreckt, und
wenn die Heizvorrichtung (4) im unteren Gehäuse (1) installiert ist, dichtet der Dichtungsring (21) gegen eine entsprechende Struktur des unteren Gehäuses (1) ab.

10. Kabinenluftregelsystem (100) nach Anspruch 9, wobei die Heizvorrichtung (4) mit mindestens einem Temperatursensor (26) versehen ist, der so konfiguriert ist, dass er die Temperaturänderung der Heizvorrichtung (4) wirksam überwacht, um Unfälle durch Überhitzung der Heizvorrichtung und Ausfälle durch Ausfall der Heizvorrichtung zu verhindern und die Regenerationstemperatur zu regeln.

## Revendications

1. Système de commande d'air d'habitacle (100) comprenant:
un boîtier supérieur (2) comprenant une première extrémité (101) et une deuxième extrémité opposée (102);
un boîtier inférieur (1) comprenant:
une première extrémité (131);
une deuxième extrémité opposée (132);
un passage d'entrée d'air (12) ayant une ouverture d'admission (110) à la première extrémité (131) du boîtier inférieur (1); et
une chambre d'air de régénération (15) communiquant avec le passage d'entrée d'air (12) via un orifice d'air de régénération (111),
dans lequel le boîtier supérieur (2) et le boîtier inférieur (1) définissent ensemble une chambre d'unité d'adsorption (16) au-dessus de la chambre d'air de régénération (15) et communiquant avec le passage d'entrée d'air (12) via un orifice d'air d'adsorption (112), et
le boîtier supérieur (2) comprend en outre un passage de sortie (115), une ouverture de sortie (13) et un conduit d'échappement (14), le passage de sortie (115) communiquant de manière sélective avec l'ouverture de sortie (13) et le conduit d'échappement (14),
une seule unité d'adsorption (3) disposée dans la chambre d'unité d'adsorption (16), l'unité d'adsorption (3) étant configurée pour adsorber l'humidité et/ou le dioxyde de carbone;
un dispositif de chauffage (4) disposé dans la chambre d'air de régénération (15), le dispositif de chauffage (4) étant configuré pour chauffer l'air avant qu'il ne soit acheminé vers l'unité d'adsorption (3), et l'air chauffé étant utilisé pour régénérer l'unité d'adsorption (3); et
un ensemble de commande de clapet (5) configuré pour commuter entre un mode d'adsorption et un mode de régénération, l'ensemble de commande de clapet (5) comprenant un clapet d'entrée (10) configuré pour être tourné entre une première position d'entrée correspondant au mode d'adsorption et une deuxième position d'entrée correspondant au mode de régénération,
dans lequel, dans la première position d'entrée, l'orifice d'air d'adsorption (112) est ouvert et l'orifice d'air de régénération (111) est fermé par le clapet d'entrée (10), de sorte que l'air s'écoule dans la chambre d'unité d'adsorption (16) et contourne le dispositif de chauffage (4), et
dans la deuxième position d'entrée, l'orifice d'air d'adsorption (112) est fermé par le clapet d'entrée (10) et l'orifice d'air de régénération (111) est ouvert, de sorte que l'air s'écoule dans la chambre d'air de régénération (15), traverse le dispositif de chauffage (4) et pénètre dans la chambre d'unité d'adsorption (16), où il est chauffé pour régénérer l'unité d'adsorption (3).

2. Système de commande d'air d'habitacle (100) selon la revendication 1, dans lequel l'ensemble de commande de clapet (5) inclut en outre un clapet de sortie (8) qui est configuré pour être tourné entre une première position de sortie correspondant au mode d'adsorption et une deuxième position de sortie correspondant au mode de régénération,
dans lequel, dans la première position de sortie, l'ouverture de sortie (13) est ouverte et le conduit d'échappement (14) est fermé par le clapet de sortie (8), de sorte que l'air adsorbé et/ou purifié s'écoule dans une cabine via l'ouverture de sortie (13), et
dans la deuxième position de sortie, l'ouverture de sortie (13) est fermée par le clapet de sortie (8) et le conduit d'échappement (14) est ouvert, de sorte que l'échappement incluant le gaz et l'eau après la régénération s'écoule vers un environnement à travers le conduit d'échappement (14).

3. Système de commande d'air d'habitacle (100) selon la revendication 2, dans lequel le clapet d'entrée (10) et le clapet de sortie (8) sont connectés par un bras de liaison (11), de sorte que le clapet d'entrée (10) et le clapet de sortie (8) sont entraînés par un seul mécanisme d'entraînement.

4. Système de commande d'air d'habitacle (100) selon la revendication 3, dans lequel l'ensemble de commande de clapet (5) inclut en outre un accouplement du clapet de sortie (7) et un accouplement du clapet d'entrée (9),
dans lequel l'accouplement du clapet de sortie (7) est connecté de manière fixe au clapet de sortie (8) et est connecté de manière rotative au mécanisme d'entraînement,
l'accouplement du clapet d'entrée (9) est connecté de manière fixe au clapet d'entrée (10),
l'accouplement du clapet de sortie (7) est pourvu d'un premier pivot excentrique (116),
l'accouplement du clapet d'entrée (9) est pourvu d'un deuxième pivot excentrique (117), et
le bras de liaison (11) est raccordé au premier pivot excentrique (116) à une extrémité et est raccordé au deuxième pivot excentrique (117) à l'autre extrémité, de sorte que, lorsque le clapet de sortie (8) est tourné par le mécanisme d'entraînement vers la première position de sortie ou la deuxième position de sortie, le clapet d'entrée (10) est également tourné vers la première position d'entrée ou la deuxième position d'entrée correspondante au moyen du bras de liaison (11).

5. Système de commande d'air d'habitacle (100) selon la revendication 4, dans lequel le clapet de sortie (8) est pourvu d'un tampon de blocage (106) à une extrémité éloignée du mécanisme d'entraînement,
dans lequel, dans la première position de sortie, le tampon de blocage (106) bloque le conduit d'échappement (14), et
dans la deuxième position de sortie, le tampon de blocage (106) ne bloque pas le conduit d'échappement (14).

6. Système de commande d'air d'habitacle (100) selon l'une quelconque des revendications 1 à 5, dans lequel l'unité d'adsorption (3) inclut un matériau d'adsorption de vapeur d'eau.

7. Système de commande d'air d'habitacle (100) selon l'une quelconque des revendications 1 à 5, dans lequel l'unité d'adsorption (3) inclut un matériau d'adsorption de dioxyde de carbone.

8. Système de commande d'air d'habitacle (100) selon l'une quelconque des revendications 1 à 5, dans lequel l'unité d'adsorption (3) inclut un matériau d'adsorption de matière volatile.

9. Système de commande d'air d'habitacle (100) selon l'une quelconque des revendications 1 à 5, dans lequel le dispositif de chauffage (4) inclut une bride d'étanchéité (27) et une bague d'étanchéité (21) s'étendant circonférentiellement autour de la bride d'étanchéité (27), et
une fois le dispositif de chauffage (4) installé dans le boîtier inférieur (1), la bague d'étanchéité (21) assure l'étanchéité contre la structure correspondante du boîtier inférieur (1).

10. Système de commande d'air d'habitacle (100) selon la revendication 9, dans lequel le dispositif de chauffage (4) est pourvu d'au moins un capteur de température (26) configuré pour surveiller efficacement le changement de température du dispositif de chauffage (4) afin d'empêcher des accidents causés par une surchauffe du dispositif de chauffage et des défaillances causées par une défaillance du dispositif de chauffage et pour contrôler la température de régénération.
